# EUROPEAN PATENT APPLICATION

(11) **EP 2 541 425 A1**
(43) Date of publication of application: **02.01.2013**
(21) Application number: 11747359.5
(22) Date of filing: 23.02.2011
(51) Int. Cl.: G06F 13/00, H04M 1/00, H04W 4/14

(54) **TERMINAL DEVICE WITH FUNCTION TO AUTOMATICALLY ATTACH AN EMAIL ADDRESS, METHOD FOR AUTOMATICALLY ATTACHING AN EMAIL ADDRESS AND PROGRAM FOR SAME**

(30) Priority: 23.02.2010 JP 2010037277
(71) Applicant: NEC Corporation, Tokyo 108-8001 (JP)
(72) Inventor: KIYOTA Toshiya, Tokyo 108-8001 (JP)
(74) Representative: Vossius & Partner
(86) International application number: PCT/JP2011/053910
(87) International publication number: WO 2011/105398

(57) **Abstract**

Disclosed is a terminal device which automatically attaches an email address, capable of transmitting and receiving text messages conforming to Short Message Service (SMS) and transmitting and receiving electronic mail, which stores the email address of the terminal device which automatically attaches an email address. The terminal device accepts commands from a user. If the terminal device detects from the content of received commands that a text message conforming to SMS is being generated, it acquires the email address and inserts the acquired email address into the generated text message. After the insertion is completed, it transmits the generated text message to the other terminal.

## Description

### {Technical Field}

The present invention relates to communication based on SMS (Short Message Service) used in a portable telephone device and a PHS (Personal Handy-phone System). More specifically, the present invention relates to transmission of an e-mail address.

### {Background Art}

Currently, portable telephone devices are widely available to the general public due to its convenience. In addition, the portable telephone devices are used to exchange messages by mails on a daily basis.

With regard to this point, many models of portable telephone devices have a function of transmitting and receiving a text based on Short Message Service (SMS) (hereinafter referred to as "SMS mail" as necessary). It should be noted that the SMS mail may also be called a text message. Although the number of characters is limited in the SMS mail, a message can be transmitted as long as a telephone number of a person in communication is known. Therefore, the SMS mail is advantageous in terms of convenience.

Currently, in Japan, transmission and reception of SMS mails is limited to those who subscribe to the same carrier. For this issue, for example, in PTL 1, there is a technique for extracting, from telephone numbers in a phonebook, only telephone numbers of the same carrier as the carrier which the user's portable telephone device subscribe to (for example, see patent literature 1).

### {Citation List}

### {Patent literature}

{PTL 1} JP-A- 2010-34928

### {Summary of Invention}

### {Technical Problem}

As described above, SMS mails are widely available, and in the future, it is planned to allow transmission and reception of SMS mails even between different carriers. Therefore, it is not necessary to use the technique described in PTL 1 and the like, and the SMS mails are considered to become more familiar.

In this manner, the SMS mail is a convenient service, with which a text mail can be transmitted when a user knows a portable telephone number of a person in communication even though the user does not know an e-mail address of the person. However, only text can be transmitted in the SMS mail, and there are various limitations such as the number of characters.

Therefore, in some situations, a user may want to use an e-mail (electronic mail: which may also be referred to as an e-mail or E mail), with which a still picture and emoji (picture) characters can be used. With regard to this point, when an e-mail is transmitted, it is necessary to obtain an e-mail address of a person in communication. In order to exchange e-mail addresses, it is necessary to exchange e-mail addresses via infrared communication or on paper or it is necessary to exchange e-mail addresses orally by means of telephone conversation, which is cumbersome.

Accordingly, it is an object of the present invention to provide a terminal apparatus having a mail address automatic attachment function, a mail address automatic attachment method, and a program thereof capable of easily exchanging an e-mail address with a person whose telephone number is only known. {Solution to Problem}

According to a first aspect of the present invention, a mail address automatic attachment terminal apparatus capable of transmitting and receiving a text based on Short Message Service and capable of transmitting and receiving an e-mail is provided. The mail address automatic attachment terminal apparatus includes storage means that stores an e-mail address of the mail address automatic attachment terminal apparatus, input means that receives operation from a user, mail address attachment means, wherein when it is detected, based on a content of the operation received by the input means, that the text based on the Short Message Service is to be generated, the mail address attachment means obtains the e-mail address from the storage means, and inserts the obtained e-mail address into the generated text, and communication means that transmits the generated text to a terminal in communication after the insertion is completed.

According to a second aspect of the present invention, a mail address automatic attachment terminal method performed by a terminal apparatus capable of transmitting and receiving a text based on Short Message Service and capable of transmitting and receiving an e-mail is provided. The mail address automatic attachment terminal method includes a step of preparing a storage unit storing an e-mail address of the terminal apparatus, an input step of receiving operation from a user, a mail address attachment step, wherein when it is detected, based on a content of the operation received in the input step, that the text based on the Short Message Service is to be generated, the e-mail address is obtained from the storage unit, and the obtained e-mail address is inserted into the generated text, and a communication step of transmitting the generated text to a terminal in communication after the insertion is completed.

According to a third aspect of the present invention, a mail address automatic attachment terminal program incorporated into a terminal apparatus capable of transmitting and receiving a text based on Short Message Service and capable of transmitting and receiving an e-mail is provided. The mail address automatic attachment terminal program causes a computer to function as a terminal apparatus that includes storage means that stores an e-mail address of the terminal apparatus, input means that receives operation from a user, mail address attachment means, wherein when it is detected, based on a content of the operation received by the input means, that the text based on the Short Message Service is to be generated, the mail address attachment means obtains the e-mail address from the storage means, and inserts the obtained e-mail address into the generated text, and communication means that transmits the generated text to a terminal in communication after the insertion is completed.

### {Advantageous Effects of Invention}

According to the present invention, an e-mail address is attached to the SMS mail, and therefore, the e-mail address can be easily exchanged with a person whose telephone number is only known {Brief Description of Drawings}

Fig. 1: A figure illustrates a basic configuration of an embodiment of the present invention.
Fig. 2: A block diagram illustrates a basic configuration of a first terminal apparatus 100 according the embodiment of the present invention.
Fig. 3: A flowchart illustrates a basic operation of the embodiment of the present invention.
Fig. 4: A figure illustrates an example of an SMS mail according to the embodiment of the present invention.

### {Reference Signs List}

100 first terminal apparatus
101 display unit
102 mail generating unit
103 communication unit
104 input reception unit
105 mail address attachment unit
106 mail address setting storage unit
200 second terminal apparatus
300 wireless communication network

### {Description of Embodiments}

First, an overview of an embodiment of the present invention will be explained. In short, the embodiment of the present invention is such that, in a communication based on SMS used in a portable telephone device and a PHS, an email address of the portable telephone device and the like is automatically attached and transmitted during transmission.

More specifically, first, a transmitting person transmits a mail address via SMS, so that a person in communication knows the mail address of the transmitting person. Then, the person in communication transmits an e-mail, so that the original transmitting person can receive an e-mail of the person in communication.

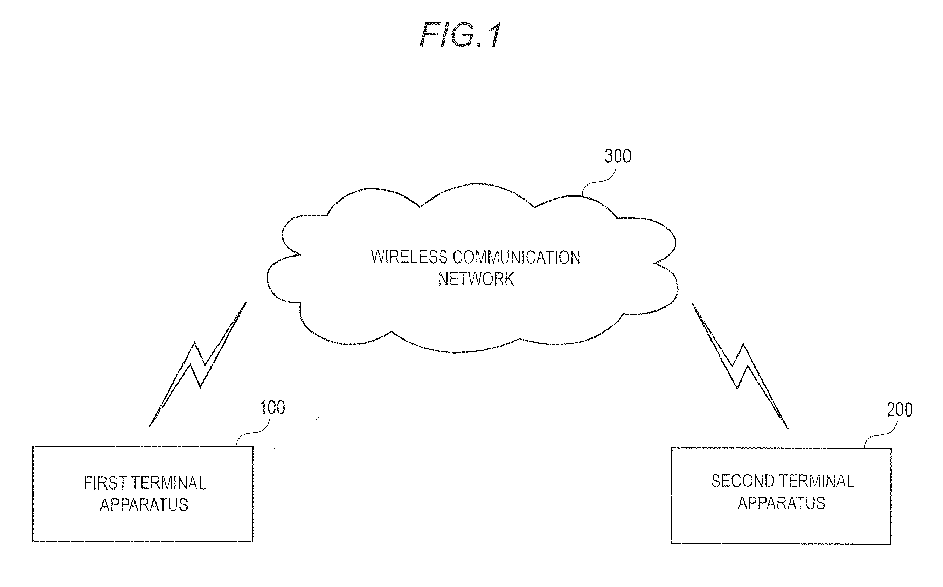

Subsequently, the embodiment of the present invention will be explained in detail with reference to drawings. As shown in Fig. 1, the embodiment of the present invention includes a first terminal apparatus 100, a second terminal apparatus 200, and a wireless communication network 300.

For example, the first terminal apparatus 100 and the second terminal apparatus 200 are portable telephone devices. It is to be understood that the embodiment of the invention of the present application is not limited to be applied to the portable telephone device. For example, the first terminal apparatus 100 and the second terminal apparatus 200 may be terminals such as PHS.

The first terminal apparatus 100 and the second terminal apparatus 200 wirelessly communicates with each other via the wireless communication network 300. The wireless communication network 300 is achieved with an apparatus such as a base station and an exchanger. It should be noted that the first terminal apparatus 100 and the second terminal apparatus 200 have a function of performing two kinds of communications, i.e., a communication based on Short Message Service and a communication based on e-mail.

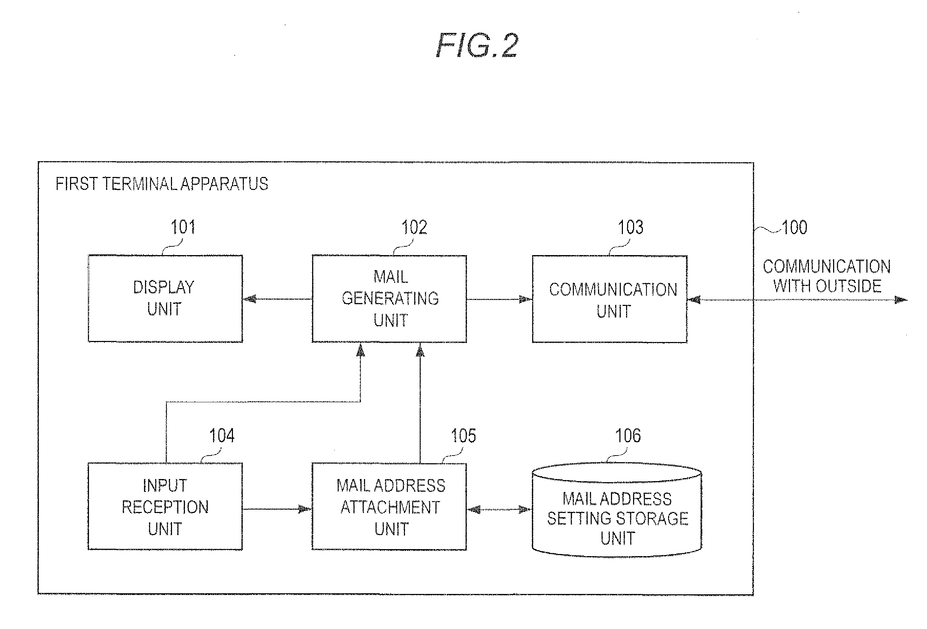

Subsequently, a configuration of the first terminal apparatus 100 will be explained with reference to Fig. 2. It should be noted that the second terminal apparatus 200 may have the same configuration as the first terminal apparatus 100, or may not have a mail address attachment unit 105 and a mail address setting storage unit 106, and may be configured to perform two kinds of communications, i.e., a communication based on Short Message Service and a communication based on e-mail.

As shown in Fig. 2, the first terminal apparatus 100 includes a display unit 101, a mail generating unit 102, a communication unit 103, an input reception unit 104, and a mail address attachment unit 105, and a mail address setting storage unit 106.

The display unit 101 is a portion that presents information to a user. More specifically, the display unit 101 is an LCD (Liquid Crystal Display), and an organic electro-luminescence display.

The mail generating unit 102 is a portion generating an e-mail using information provided by the input reception unit 104 and the mail address attachment unit 105. The e-mail generated or being generated by the mail generating unit 102 is displayed on the display unit 101.

The communication unit 103 is a portion for wireless communication, and is achieved with a device such as an antenna. The first terminal apparatus 100 communicated with the outside using the communication unit 103.

The input reception unit 104 is a portion that receives input (operation), from the user. More specifically, the input reception unit 104 is an input device such as a numeric keypad. Alternatively, the display unit 101 and the input reception unit 104 may be integrally formed, and the input reception unit 104 may be achieved as, for example, a touch panel.

The mail address attachment unit 105 is a portion for attaching the mail address to the e-mail generated by the user.

The mail address setting storage unit 106 is a portion storing the e-mail address of the first terminal apparatus 100 and setting whether the e-mail address is automatically attached or not.

It should be noted that units as illustrated in Fig. 2 are only portions provided in the first terminal apparatus 100 which are particularly related to the present embodiment. The first terminal apparatus 100 has a portion omitted form the figure such as a power supply for operating as a generally-available portable telephone device and the like.

Each unit as illustrated in Fig. 2 can be achieved with hardware, but can also be achieved by causing an arithmetic processing device provided in the first terminal apparatus 100 to read and execute a program.

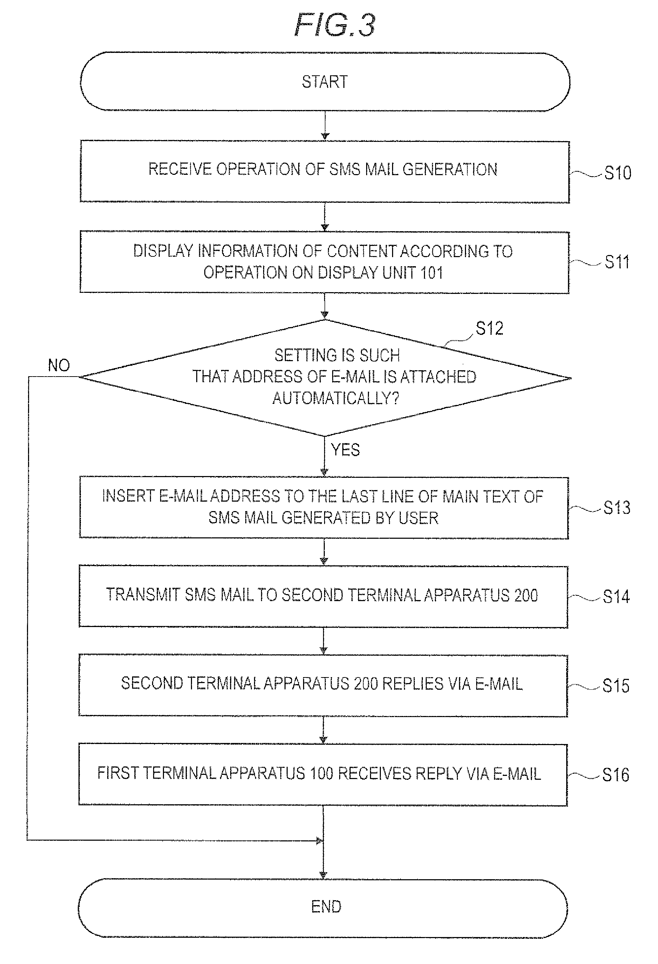

Subsequently, operation of the embodiment of the invention of the present application will be explained in detail with reference to the flowchart of Fig. 3.

First, the input reception unit 104 receives operation of generation of an SMS mail generation from the user (step S10). The mail generating unit 102 displays information of content according to this operation on the display unit 101 (step S11). In the main text of the SMS mail, like generally-available techniques, the user can generate text data.

On the other hand, the mail address attachment unit 105 having detected that operation was performed to generate the SMS mail looks up the mail address setting storage unit 106 to check whether the address of the e-mail is attached automatically or not (step S12).

In this case, when the setting is such that the address of the e-mail is automatically attached (Yes in step S 12), step S 13 is subsequently performed. On the other hand, when the setting is such that the address of the e-mail is not automatically attached (No in step S12), the operation is terminated. In this case, the SMS mail generated by the user is transmitted as it is. It should be noted that the setting as to whether the address of the e-mail is automatically attached or not is set by the user in advance.

The setting may be made by the user. Alternatively, for example, even when the setting is such that the attachment is not automatically made, the setting may be switched so that the attachment is automatically made when the e-mail address is changed.

The setting may be made by the user. The address of the e-mail may be attached automatically at all times. In this case, step S12 is omitted, and after step S11, the operation of step S13 is performed. Still alternatively, instead of making the setting in advance, the user may be asked to check whether the e-mail address is attached or not every time an SMS mail is generated.

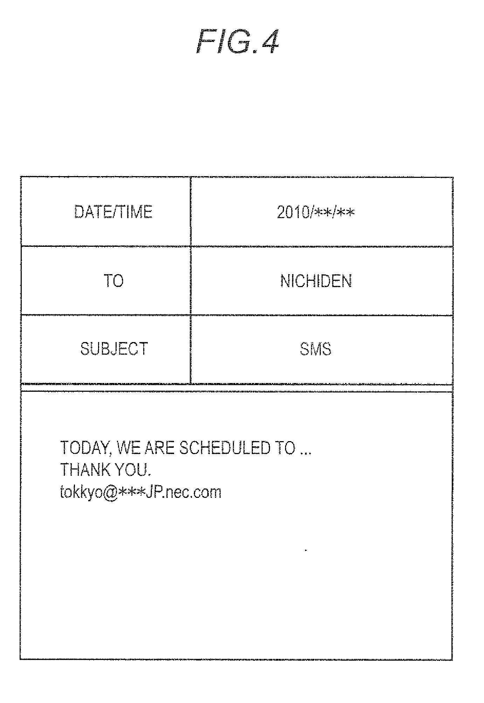

Subsequently, in step S13, the mail address attachment unit 105 reads the e-mail address of the first terminal apparatus 100 from the mail address setting storage unit 106, and inserts the read e-mail address to the end of the text of the SMS mail generated by the user (in the last line of the main text), thus making the attachment. Fig. 4 illustrates a specific example of an SMS mail to which an e-mail address is inserted. As can be understood from Fig. 4, the e-mail address "tokkyo@***.jp.nec.com" of the first terminal apparatus 100 already registered to the end of the text is inserted. It should be noted that the e-mail address may not be inserted to the end of the text. The e-mail address may be inserted to the head of the text.

When the SMS mail to which the e-mail address is inserted is completed, this SMS mail is transmitted to the second terminal apparatus 200 via the communication unit 103 and the wireless communication network 300 (step S14).

When the SMS is transmitted, the receiving person who is the user of the second terminal apparatus 200 can transmit a reply via SMS, but the receiving person can use e-mail for reply by selecting the e-mail address described in the main text (step S15).

Then, the reply from the second terminal apparatus 200 via e-mail is received by the first terminal apparatus 100 (step S16), so that the user of the first terminal apparatus 100 can know the e-maii address of the second terminal apparatus 200. In order to prompt the user of the second terminal apparatus 200 to reply via e-mail, a message, e.g., "please reply to the e-mail address below", may be added to the text, or a message to that effect may be automatically inserted in addition to the e-mail address of the first terminal apparatus 100.

The embodiment of the present invention explained above achieves many effects as shown below.

The first advantage lies in that the e-mail address can be easily transmitted to a person whose telephone number is only known without using infrared communication, paper, or the like.

This is because the address of the e-mail is automatically attached to the SMS mail.

The second advantage lies in that the address of the e-mail can be obtained by looking up the SMS mail.

This is because the SMS mail to which the address of the e-mail is attached can be received.

The third advantage lies in that the user can know the e-mail address of the person whose telephone number is only known.

This is because the reply via e-mail can be received from the receiving person who receives the SMS mail to which the address of the e-mail is automatically attached.

The mail address automatic attachment method according to the embodiment of the present invention can be achieved with hardware, but can also be achieved by causing a computer to read and execute a program, which causes the computer to execute the method, from a computer-readable recording medium.

Further in the above embodiment, the program is stored in the terminal apparatus in advance.
Alternatively, the computer may be caused to operate as whole or a part of the terminal apparatus, or a program for executing the above processing may be stored in a computer-readable recording medium such as a flexible disk, a CD-ROM (Compact Disc Read-Only Memory), a DVD (Digital Versatile Disc), an MO (Magneto Optical Disk (Disc)), and a BD (Blu-ray Disc) and may be distributed, so that this is installed to another computer, and this may be caused to operate as the above means or may be caused to execute the above steps.
Further, a program may be stored in a disk apparatus provided in a server apparatus on the Internet, and, for example, the program may be carried by a carrier wave, and the program may be executed upon being downloaded to a computer, for example.

Although the embodiment explained above is a preferred embodiment of the present invention, this is not intended to limit the scope of the present invention to only the embodiment explained above, and it is possible to carry out in variously modified form without deviating from the gist of the present invention.

Although the details of the embodiment representing the present invention has been described, it should be understood that various changes, substitutions, and alternatives can be made without deviating from the spirit and the scope of the invention defined in the claims. Even if amendment is made to the claims in the prosecution of the application, the inventor understands that the equivalent scope of the claimed invention is to be maintained.

The present application is based on Japanese Patent Application 2010-037277 (filed on February 23, 2010), and claims priority based on Japanese Patent Application No. 2010-037277 under the Paris Convention. The contents disclosed in Japanese Patent Application No. 2010-037277 are incorporated into this specification by reference.

Some or all of the embodiment explained above may be described as shown in the appendixes below, but are not limited to the configurations below.

(Appendix 1) A mail address automatic attachment terminal apparatus capable of transmitting and receiving a text based on Short Message Service and capable of transmitting and receiving an e-mail, the mail address automatic attachment terminal apparatus comprising:
storage means that stores an e-mail address of the mail address automatic attachment terminal apparatus;
input means that receives operation from a user;
mail address attachment means, wherein when it is detected, based on a content of the operation received by the input means, that the text based on the Short Message Service is to be generated, the mail address attachment means obtains the e-mail address from the storage means, and inserts the obtained e-mail address into the generated text; and
communication means that transmits the generated text to a terminal in communication after the insertion is completed.

(Appendix 2) The mail address automatic attachment terminal apparatus according to Appendix 1, wherein the storage means further stores setting information which is information indicating whether the e-mail address is inserted into the generated text or not, and
the mail address attachment means inserts the e-mail address only when a content of the setting information is a content indicating that a text is to be inserted.

(Appendix 3) The mail address automatic attachment terminal apparatus according to Appendix 2, wherein when the e-mail address is changed, the content of the setting information is switched to a content indicating a text is to be inserted.

(Appendix 4) The mail address automatic attachment terminal apparatus according to any one of Appendixes 1 to 3,
wherein not only the e-mail address but also a message asking to reply an e-mail to the e-mail address are inserted into the text.

(Appendix 5) A mail address automatic attachment method performed by a terminal apparatus capable of transmitting and receiving a text based on Short Message Service and capable of transmitting and receiving an e-mail, the mail address automatic attachment method comprising:
a step of preparing a storage unit storing an e-mail address of the terminal apparatus;
an input step of receiving operation from a user;
a mail address attachment step, wherein when it is detected, based on a content of the operation received in the input step, that the text based on the Short Message Service is to be generated, the e-mail address is obtained from the storage unit, and the obtained e-mail address is inserted into the generated text; and
a communication step of transmitting the generated text to a terminal in communication after the insertion is completed.

(Appendix 6) The mail address automatic attachment method according to Appendix 5, wherein the storage unit further stores setting information which is information indicating whether the e-mail address is inserted into the generated text or not, and
in the mail address attachment step, the e-mail address is inserted only when a content of the setting information is a content indicating that a text is to be inserted.

(Appendix 7) The mail address automatic attachment method according to Appendix 6, wherein when the e-mail address is changed, the content of the setting information is switched to a content indicating a text is to be inserted.

(Appendix 8) The mail address automatic attachment method according to any one of Appendixes 5 to 7,
wherein not only the e-mail address but also a message asking to reply an e-mail to the e-mail
address are inserted into the text.

(Appendix 9) A mail address automatic attachment program incorporated into a terminal apparatus capable of transmitting and receiving a text based on Short Message Service and capable of transmitting and receiving an e-mail, the mail address automatic attachment program causing a computer to function as a terminal apparatus comprising:
storage means that stores an e-mail address of the terminal apparatus;
input means that receives operation from a user;
mail address attachment means, wherein when it is detected, based on a content of the operation received by the input means, that the text based on the Short Message Service is to be generated, the mail address attachment means obtains the e-mail address from the storage means, and inserts the obtained e-mail address into the generated text; and
communication means that transmits the generated text to a terminal in communication after the insertion is completed.

(Appendix 10) The mail address automatic attachment program according to Appendix 9,
wherein the storage means further stores setting information which is information indicating
whether the e-mail address is inserted into the generated text or not, and
the mail address attachment means inserts the e-mail address only when a content of the setting information is a content indicating that a text is to be inserted.

(Appendix 11) The mail address automatic attachment program according to Appendix 10, wherein when the e-mail address is changed, the content of the setting information is switched to a content indicating a text is to be inserted.

(Appendix 12) The mail address automatic attachment program according to any one of Appendixes 10 and 11, wherein not only the e-mail address but also a message asking to reply an e-mail to the e-mail address are inserted into the text.

## Claims

1. A mail address automatic attachment terminal apparatus capable of transmitting and receiving a text based on Short Message Service and capable of transmitting and receiving an e-mail, the mail address automatic attachment terminal apparatus comprising:
storage means that stores an e-mail address of the mail address automatic attachment terminal apparatus;
input means that receives operation from a user;
mail address attachment means, wherein when it is detected, based on a content of the operation received by the input means, that the text based on the Short Message Service is to be generated, the mail address attachment means obtains the e-mail address from the storage means, and inserts the obtained e-mail address into the generated text; and
communication means that transmits the generated text to a terminal in communication after the insertion is completed.

2. The mail address automatic attachment terminal apparatus according to claim 1, wherein
the storage means further stores setting information which is information indicating whether the e-mail address is inserted into the generated text or not, and
the mail address attachment means inserts the e-mail address only when a content of the setting information is a content indicating that a text is to be inserted.

3. The mail address automatic attachment terminal apparatus according to claim 2, wherein when the e-mail address is changed, the content of the setting information is switched to a content indicating a text is to be inserted.

4. The mail address automatic attachment terminal apparatus according to any one of claims 1 to 3, wherein not only the e-mail address but also a message asking to reply an e-mail to the e-mail address are inserted.

5. A mail address automatic attachment method performed by a terminal apparatus capable of transmitting and receiving a text based on Short Message Service and capable of transmitting and receiving an e-mail, the mail address automatic attachment method comprising:
a step of preparing a storage unit storing an e-mail address of the terminal apparatus;
an input step of receiving operation from a user;
a mail address attachment step, wherein when it is detected, based on a content of the operation received in the input step, that the text based on the Short Message Service is to be generated, the e-mail address is obtained from the storage unit, and the obtained e-mail address is inserted into the generated text; and
a communication step of transmitting the generated text to a terminal in communication after the insertion is completed.

6. The mail address automatic attachment method according to claim 5, wherein the storage unit further stores setting information which is information indicating whether the e-mail address is inserted into the generated text or not, and
in the mail address attachment step, the e-mail address is inserted only when a content of the setting information is a content indicating that a text is to be inserted.

7. The mail address automatic attachment method according to claim 6, wherein when the e-mail address is changed, the content of the setting information is switched to a content indicating a text is to be inserted.

8. The mail address automatic attachment method according to any one of claims 5 to 7, wherein not only the e-mail address but also a message asking to reply an e-mail to the e-mail address are inserted.

9. A mail address automatic attachment program incorporated into a terminal apparatus capable of transmitting and receiving a text based on Short Message Service and capable of transmitting and receiving an e-mail, the mail address automatic attachment program causing a computer to function as a terminal apparatus comprising:
storage means that stores an e-mail address of the terminal apparatus;
input means that receives operation from a user;
mail address attachment means, wherein when it is detected, based on a content of the operation received by the input means, that the text based on the Short Message Service is to be generated, the mail address attachment means obtains the e-mail address from the storage means, and inserts the obtained e-mail address into the generated text; and
communication means that transmits the generated text to a terminal in communication after the insertion is completed.
